# EUROPEAN PATENT SPECIFICATION

(11) **EP 1 671 169 B1**
(45) Date of publication and mention of the grant of the patent: **07.06.2017**
(21) Application number: 04786650.4
(22) Date of filing: 22.09.2004
(51) Int. Cl.: G02B 6/36, G02B 6/38

(54) **KEYED FIBRE OPTIC CONNECTOR**
FASEROPTISCHER VERBINDER MIT SCHLÜSSEL
CONNECTEUR DE FIBRE OPTIQUE A CLE

(30) Priority: 22.09.2003 CA 2441872; 22.09.2003 US 504189 P
(43) Date of publication of application: 21.06.2006
(73) Proprietor: Belden CDT (Canada) Inc., Pointe Claire, Québec H9R 5Z3 (CA)
(72) Inventor: MILETTE, Luc, Montreal, Quebec H2C 1N3 (CA)
(74) Representative: Kuhnen & Wacker
(86) International application number: PCT/CA2004/001730
(87) International publication number: WO 2005/029147

(56) References cited:
- EP-A1- 0 098 205
- EP-A2- 1 445 633
- US-A- 5 682 451
- US-A1- 2002 126 960
- US-A1- 2002 131 722
- US-A1- 2004 165 833
- US-B1- 6 416 334

## Description

### FIELD OF THE INVENTION

The present invention relates to a keyed fibre optic connector. In particular, the present invention relates to an interlocking connector and receptacle pair for fibre optic cables with a geometric keying system moulded into the interface thereby preventing connectors with a first key from being interconnected via a receptacle having a differing key.

### BACKGROUND OF THE INVENTION

Optical fibres terminated by connectors and the receptacles which are adapted to receive these connectors are an important part of virtually any fibre optic communications system. For example, such connectors and receptacles may be used to interconnect fibre segments to create longer lengths, to connect optic fibre to active or passive devices, etc.. However, in some cases, for example for security reasons or in order to better manage a telecommunications network, it is desired to physically limit the insertion of a connector plug into a particular receptacle socket, and as a result prevent the transmission of data via that connector plug and receptacle socket.

The prior art reveals a variety of systems for preventing a connector plug from being inserted into a receptacle socket. One of these prior art systems comprises at least one tab arranged at a certain position on the connector plug, each of which is adapted for insertion into a corresponding tab receiving indentation moulded in the receptacle socket. In the absence of such a hollow the tab butts against the opening of the receptacle socket, thereby preventing the connector plug from being completely inserted into the receptacle socket, thereby preventing the connector plug from being correctly interconnected with the receptacle socket. One drawback of these prior art designs is that that the tab, being typically moulded into the plastic connector plug housing, can be easily removed by filing or using a sharp blade or the like. Another drawback is that such prior art designs only allow two types of connector plugs to be differentiated between: connector plugs with a tab and connector plugs without a tab.

The prior art also reveals keying systems such as the US patent application published with the number 2002/0126960 A1 comprising a connector plug and receptacle socket. Interconnection of the connector plug and receptacle socket is limited to connector plug/receptacle socket pairs where a key within the receptacle socket mates with a corresponding key receiving slot in the connector plug. A connector plug with a key receiving slot in one position is unable to interconnect with receptacle sockets with a differently positioned key. As a result, by providing a number of differently positioned keys and key receiving slot a system of selective interconnection between connector plugs and receptacle sockets can be arrived at. These systems, however, are generally impractical in many fibre optic systems given the relatively small size of the connector plug and the receptacle socket.

### SUMMARY OF THE INVENTION

In order to address the drawbacks of the prior art, there is provided a keying system according to claim 1, a receptacle according to claim 34 and a connector according to claim 67.

### BRIEF DESCRIPTION OF THE DRAWINGS

Figure 1 is an orthogonal view of a connector in accordance with an illustrative embodiment of the present invention;
Figure 2 is a front plan view of a connector in accordance with an illustrative embodiment of the present invention;
Figure 3 is an orthogonal view of a receptacle in accordance with an illustrative embodiment of the present invention;
Figure 4 is a front plan view of a receptacle in accordance with an illustrative embodiment of the present invention;
Figure 5A is an orthogonal view of a connector in accordance with an alternative illustrative embodiment of the present invention;
Figure 5B is a side plan view of a connector in accordance with an alternative illustrative embodiment of the present invention;
Figure 6 is a front plan view of a receptacle with a connector installed in a socket thereof in accordance with an illustrative embodiment of the present invention;
Figure 7 is a side cut away view along VII-VII in Figure 6;
Figure 8 is an orthogonal view of a connector in accordance with an alternative illustrative embodiment of the present invention;
Figure 9 is a front plan view of a receptacle in accordance with an alternative illustrative embodiment of the present invention;
Figure 10 is an orthogonal view of a connector in accordance with a second alternative illustrative embodiment of the present invention;
Figure 11 is an orthogonal view of a receptacle in accordance with an second alternative illustrative embodiment of the present invention;
Figure 12 is an orthogonal view of a receptacle in accordance with an alternative illustrative embodiment of the present invention;
Figure 13 is an orthogonal view of a connector in accordance with a third alternative illustrative embodiment of the present invention;
Figure 14 is an orthogonal view of a connector in accordance with a forth alternative illustrative embodiment of the present invention;
Figure 15 is an orthogonal view of a receptacle in accordance with a fourth alternative illustrative embodiment of the present invention;
Figure 16 is an orthogonal view of a receptacle in accordance with a fifth alternative illustrative embodiment of the present invention;
Figure 17 is a front plan view of a receptacle in accordance with a fifth alternative illustrative embodiment of the present invention;
Figure 18 is a side cut away view along XVIII in Figure 17 of a receptacle in accordance with a fifth alternative illustrative embodiment of the present invention;
Figure 19A is an orthogonal view of an illustrative embodiment of an installer modifiable connector keying system;
Figure 19B is a front orthogonal view of a second illustrative embodiment of an installer modifiable connector keying system; and
Figure 20 is a front orthogonal view of a receptacle for mounting on active devices.

### DETAILED DESCRIPTION OF THE ILLUSTRATIVE EMBODIMENTS

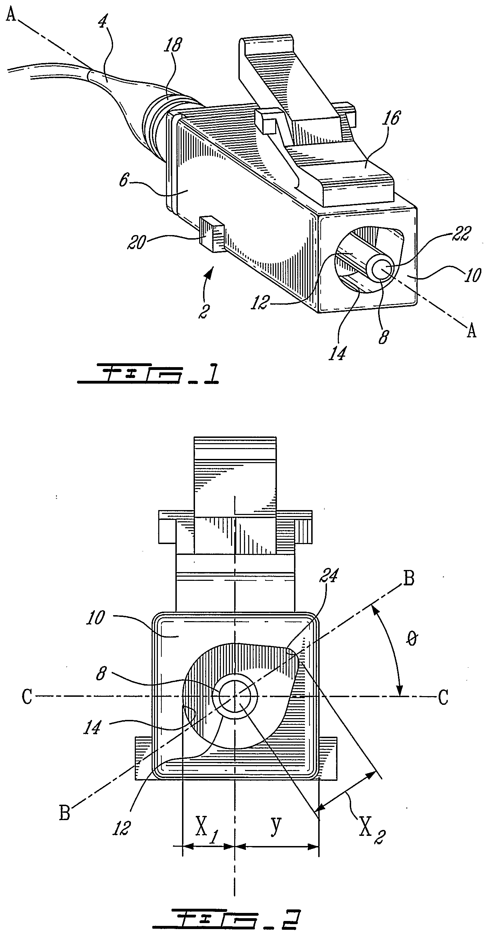

Referring now to Figure 1, a fibre optic connector in accordance with an illustrative embodiment of the present invention will be described. The connector, generally referred to using the reference numeral 2, which serves to connect a fibre optic cable 4 to a receptacle (not shown) is disclosed. As illustrated, connector 2 forms part of a cable assembly with an LC type connector plug attached at one end. It should be noted that although the illustrative embodiment of the present invention is described in reference to LC type connectors, it is not intended to limit the invention to this type of connector. Accordingly, the present invention may also be used, for example, with LC, SC, FC, MU and other similar connectors having a ferrule guide and/or support.

Still referring to Figure 1, the connector is comprised of a connector plug housing 6, fabricated from a suitable non-conductive material such as glass-filled thermoplastic, through which the optic fibre 8 extends protruding from a forward end 10 thereof. The optic fibre 8 is held rigidly within a hollow ferrule 12, fabricated from a suitable stiff non-conductive material such as ceramics, which is in turn held in axial alignment within the plug housing 6, thus ensuring that the optical fibre is maintained in substantially axial alignment with the central axis A of the plug housing 6. Typically, ferrule 12 is held rigidly inside the plug housing 6, but may also be spring loaded allowing some movement of the ferrule 12, and thus the optic fibre 8, forward and backwards along the central axis A.

A cavity 14, also in axial alignment with the central axis A, is moulded or machined into the forward end 10 of the plug housing 6 with the optic fibre 8/ferrule assembly 12 being axially aligned therein. A flexible locking tab or latch 16 is attached to the outside of the plug housing 6 allowing the plug housing 6 to be removably attached to a suitable receptacle (not shown). The join between optic fibre cable 4 and the plug housing 6 is protected by means of a flexible strain-relieving boot 18, typically manufactured from rubber, rubberised plastic or the like. A pair of raised tabs as in 20 may be moulded to the outside of the plug housing which, as will be seen below, mate with corresponding indentations in the receptacle (both not shown).

During fabrication, the optic fibre 8 is typically inserted through the ferrule 12 and bonded thereto with an appropriate adhesive or bonding technique. The ends of the optic fibre 8/ferrule 12 are then cut and polished according to a predefined geometry dictated by the standard being implemented. The polishing results in an exposed end 22 of the optic fibre 8 extending forward of the forward end 10 of the plug housing, thereby allowing light to propagate to and from the optic fibre 8.

Referring now to Figure 2, a first illustrative embodiment of a keying system in accordance with the present invention will be described in more detail. The cavity 14, through which the optic fibre 8/ferrule 12 assembly extends, is configured to one of a plurality of predefined connector keying geometries. The connector keying geometry is illustratively provided by a cavity having a cavity keying geometry having an oval or egg shaped cross-section with a first generally circular concentric portion of radius X₁ and a keying portion 24 extending a distance X₂ from the centre of the optic fibre 8, with X₂ being illustratively greater than radius X₁. As illustrated in Figure 2, the cavity keying portion 24, for example a flute, notch or protuberance, is illustratively symmetric about an axis B, with axis B at a predetermined connector keying angle *θ* from the horizontal plane C. Of course, the maximum point of extension X₂ from the core of the optic fibre 8 must be chosen such that it is sufficiently less than distance y between the centre of the optic fibre 8 and the outer surface of the plug housing 6 to ensure that sufficient material remains between the cavity 14 and the outer surface of the plug housing 6 for all keying angles *θ*. The other dimensions of the cavity keying portion 24 such as the width and profile, are preferably selected such that the cavity keying portion 24 is difficult to modify, for example by removing the cavity keying portion 24 using a knife or the like in the case of a protuberance, or to modify without destroying the connector 2, thereby deterring the user from modifying the connector 2 for other purposes.

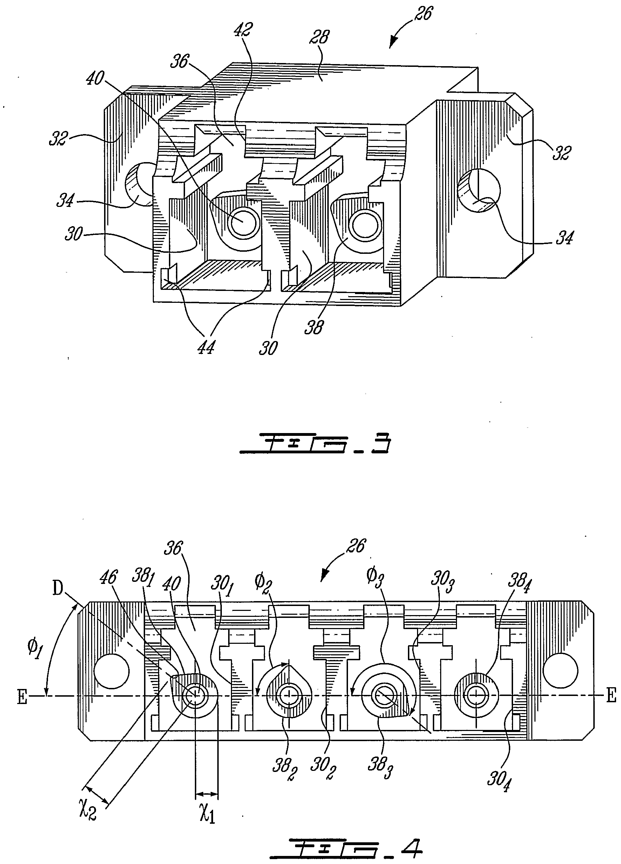

The cross section of the cavity keying portion 24 could alternatively be of a different shape, for example a square notch or concave depression in the side wall of the cavity 14, or could also be asymmetric. As will be seen below, the combination of the cavity keying portion 24 with the connector keying angle *θ* provides one embodiment for the connector portion of the keying system. Referring now to Figure 3, a receptacle in accordance with an illustrative embodiment of the present invention will be described. The receptacle, generally referenced using the numeral 26, illustratively comprises a receptacle housing 28 fabricated from a non-conductive material such as glass-filled thermoplastic into which are moulded one or more receptacle sockets 30. Referring to Figure 1 in addition to Figure 3, the sockets 30 are dimensioned for receiving the forward end 10 of the plug housing 6 which is held snugly therein. Note that, although in the present illustrative embodiment a receptacle 26 having a duplex configuration with two (2) sockets 30 is disclosed, the receptacle 26 could also be simplex with a single socket 30, or provide for three (3) or more sockets 30.

Referring back to Figure 3, the receptacle housing 28 can be fastened to a patch bay panel or the like (not shown) by means of a pair of integrated flanges 32 and/or by screws or similar fasteners inserted through the cut-outs 34 in the flanges.

Each receptacle socket 30 is terminated by a rear wall 36 and onto which is moulded a raised boss 38, illustratively of an oval or egg shape, having a circular ferrule accepting bore 40 therein. Also moulded into the socket 30 is a reciprocal locking mechanism 42 which, referring to Figure 1 in addition to Figure 3, mates with the latch 16, thereby securely interlocking the connector 2 with the receptacle 26 when the connector plug housing 6 is completely inserted into the socket 30. A pair of indentations 44 are also moulded in the socket 30 which mate with the corresponding tabs 20 moulded into the connector plug housing 6. The tabs 20 prevent a connector 2 from being completely inserted into a receptacle 26 which does not have these indentations. Note that in an alternative embodiment both the tabs 20 and indentations 44 could be absent without otherwise affecting the present invention.

Referring now to Figure 4, each socket 30 is configured to one of a plurality of predefined receptacle keying geometries. Illustratively, the receptacle keying geometry is provided by a raised boss 38 having a boss keying geometry, mounted on the rear wall 36 of the socket 30 comprising an oval or egg-shaped cross-section having a first generally circular concentric portion of radius x₁ and a keying portion 46 projecting a distance of x₂ from the centre of the ferrule cavity 40, x₂ being illustratively greater than radius x₁, although in a given implementation the distance of x₂ could also be smaller than x₁. The boss keying portion 46 is illustratively symmetric about an axis such as D, with axis D at a predetermined receptacle keying angle *ϕ*₁ from the horizontal plane E.

Referring to Figure 2 in addition to Figure 4, in order for a connector 2 to correctly mate with a receptacle 26, the keying angles *θ* and *ϕ* as well as the lengths X₁, X₂ and x₁, x₂ must match such that the cross-section of the raised boss 38 is the mirror image of the cross-section of the cavity 14 and that the cavity 14 fits snugly over the raised boss 38. For example, in the illustrative embodiment if the keying angles *θ* and *ϕ* do not match, then a portion of the front surface 10 of the connector plug housing 6 will butt against the boss keying portion 46 of the raised boss 38 thereby preventing the connector 2 from being correctly inserted into the receptacle 26.

It is foreseen that a combination of eight (8) keying angles *θ* and *ϕ* equally distributed around 360° (for example 0°, 45°, 90°, 135°, 180°, 225°, 270°, 315°) will provide adequate keying for most applications, although it will be understood that this could easily be extended to sixteen (16) or even greater with precision manufacturing of the connector 2 and receptacle 26. Referring back to Figure 4, it is also foreseen that receptacles 26 can have multiple sockets 30₁, 30₂, 30₃ each socket 30₁, 30₂, 30₃ having a raised boss 38₁, 38₂, 38₃ with differing keying angles *ϕ*₁, *ϕ*₂, *ϕ*₃. It will be understood that although a receptacle 26 is shown with three raised bosses 38₁, 38₂, 38₃, and three keying angles *ϕ*₁, *ϕ*₂, *ϕ*₃ a receptacle 26 could easily be manufactured having many sockets 30, each socket 30 having a corresponding raised boss 38 and keying angle *ϕ* in any one of a number of combinations. It should also be understood that multiple connectors 2 with different connector keying angles *θ* can also be bundled together into a multiple connector assembly (not shown). It should also be understood that sockets such as 30₄ may be included with raised bosses such as 38₄ which are circular in cross-section without the inclusion of a receptacle keying portion, thereby allowing conventional non-keyed connectors to be inserted into the receptacle 26.

Note that, although the above illustrative embodiment has been described with the cavity 14 being moulded or machined into the forward end 10 of the plug housing 6 and the raised boss 38 being located within the receptacle socket 30, a person of ordinary skill in the art would understand that, with appropriate modifications, the cavity 14 could be moulded or otherwise formed into the receptacle socket 30 and the boss formed in the forward end 10 of the plug housing 6.

Of note is that the present system can be designed for use as a one-way system or a two-way system. A one-way system being defined as a system where keyed connectors can only be connected with a keyed receptacle and a two-way system is defined as a system where keyed connectors are backward compatible with legacy system receptacles (or vice versa), allowing for example, keyed connectors to be used with existing receptacles.

Referring to Figure 4, for example, in an illustrative embodiment of a two-way system using existing circular legacy bosses as in 38₄ is disclosed. These legacy bosses 38₄ allow for the plug housing 6 of a connector 2 to be correctly inserted into the socket 30₄ regardless of the connector keying angle *θ* (provided, of course, the length X₁ of Figure 2 is less than the length X₂ and corresponds to the radius of the legacy boss 30₄).

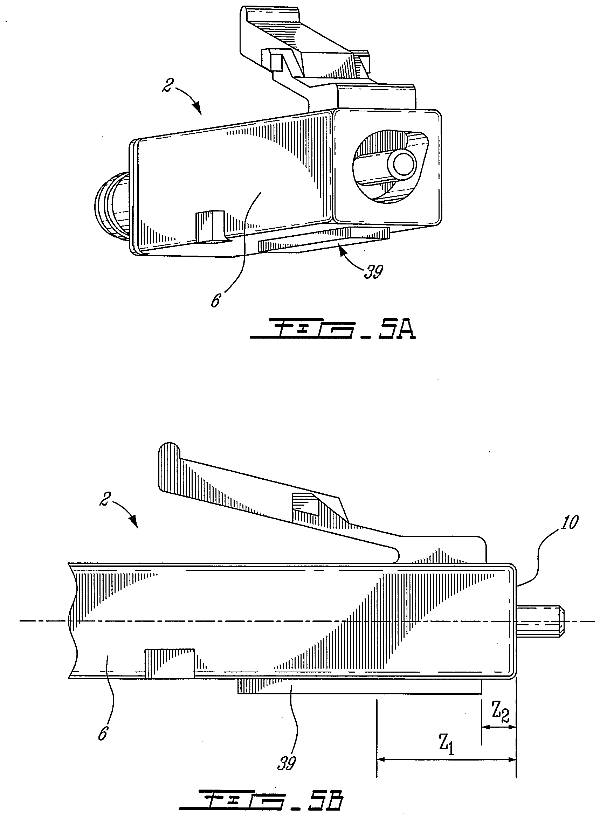

Referring to Figure 5A in addition to Figure 4, an illustrative embodiment of a one-way system is disclosed. In order to stop a keyed connector 2 from being inserted into a socket such as socket 30₄, a tab 39 could be moulded into or otherwise attached to the outside of the plug housing 6. Referring to Figure 5B, as known in the art, existing LC type behind the wall (BTW) connectors and receptacles include such an assembly. However, the tabs of these prior art connectors extend only partially along the plug housing 6 and stop at a position Z₁ well short of the forward end 10 of the plug housing 6. By extending the tab 39 such that it stops at a position Z₂ closer to the forward end 10 of the plug housing 6, the plug housing 6 can also be prevented from being fully inserted into legacy LC receptacles. In order for such a connector 2 to be correctly inserted into a receptacle 26, the socket 30 will have to be modified to include a notch within which the tab 39 fits. It will be apparent now to a person of ordinary skill in the art that, in the absence of a receiving groove in the receptacle (all not shown) for the tab 39, or a groove of the correct depth, the tab 39 would butt against the receptacle housing thereby preventing the user from inserting the plug housing 6 completely into the socket 30.

It is also foreseen that the plug housings 6 and the sockets 30 be colour coded, with a given colour corresponding to a given pair of keying angles *θ*, *ϕ*, in order to aid the user in determining which connector 2 belongs in which socket 30. Additionally, other coding means such as symbols, alphanumeric characters, etc., may be used alone or in combination with colours to provide a variety of means for distinguishing keyed connectors and receptacle sockets from one another.

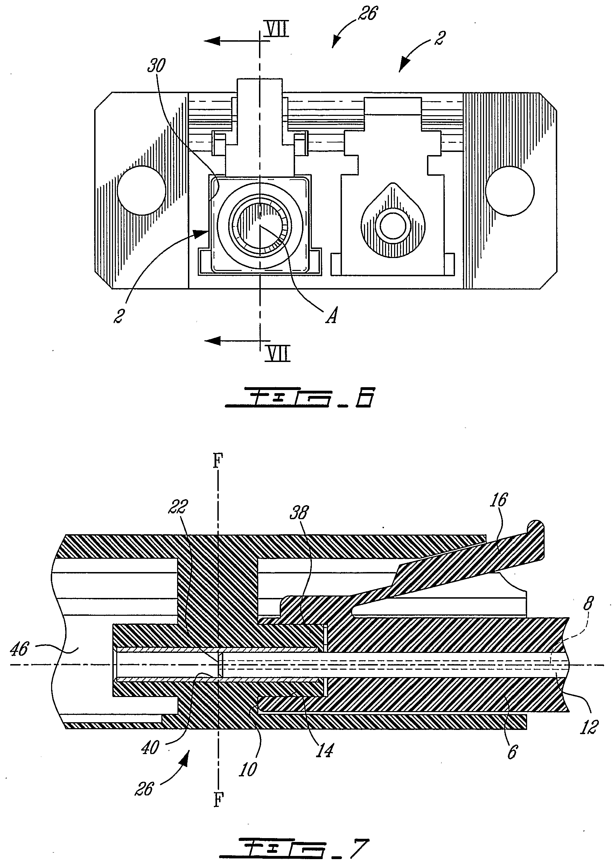

Referring now to Figure 6, a connector 2 inserted into the first socket 30 of a duplex receptacle 26 is shown. Referring to Figure 7 in addition to Figure 6, and assuming that the keying angles *θ*, *ϕ* are a matched pair, on insertion the forward end 10 of the plug housing 6 butts against the rear wall 36 of the socket 30. At this point the latch 16 is engaged by the reciprocal locking mechanism 42 thereby holding the plug housing 6 securely in the socket 30. Simultaneously, the ferrule 12 containing the optic fibre is inserted into the ferrule accepting bore 40 and the raised boss 38 is encircled by the cavity 14, with the exposed end 22 of the optic fibre 8 being substantially in alignment with reference plane F. Insertion of a second connector (not shown) into a similar socket 46 moulded into the rearward side of the receptacle 26 and in back-to-back relationship with the socket 30 would have the effect bringing the exposed end of the second connector's optic fibre into close contact with the exposed end 22 of the optic fibre 8, with the optic fibres being substantially axially aligned, and thereby allowing light propagating in one of the optic fibres to be transferred to the other. Typically (although not necessarily), sockets as in 30, 46 in back-to-back relationship would have the same predefined receptacle keying geometries to ensure that fibre optic cables having compatible connector keying geometries could be interconnected.

The connector 2 can be readily removed from the receptacle 26 by depressing the latch 16, thereby releasing the reciprocal locking mechanism 42.

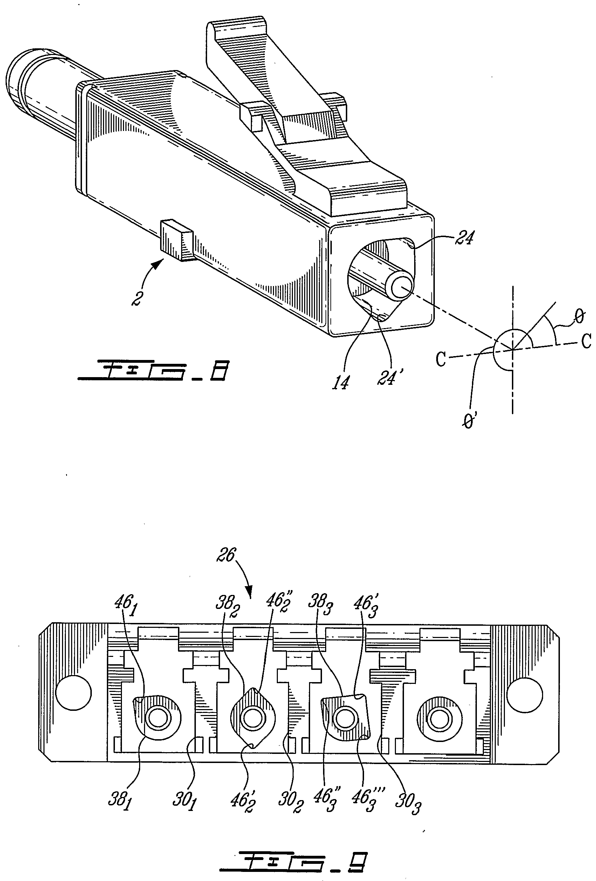

Referring to Figure 8, a connector 2 in accordance with an alternative illustrative embodiment of the present invention is disclosed. In this embodiment the cavity 14 includes two connector keying portions 24, 24' corresponding to two different connector keying angles *θ*, *θ*'. In this manner, connectors 2 can be provided which mate with the sockets having receptacle keying portions with different keying angles *ϕ*, provided, of course, that the receptacle keying angle *ϕ* matches with one of the connector keying angles *θ*, *θ*'. It will now be apparent to a person of ordinary skill in the art that the number of connector keying portions 24 at a variety of keying angles *θ* could be increased to provided for a variety of keying situations.

Referring to Figure 9 in addition to Figure 8, receptacles 26 having sockets 30₁, 30₂, 30₃ with raised bosses 38₁, 38₂, 38₃ are disclosed. Raised bosses 38₂, 38₃ are depicted as having multiple receptacle keying portions (respectively) 46₂', 46₂" and 46₃', 46₃", 46₃"'. When combined with a corresponding set of connectors 2 having multiple connector keying portions 24, 24', etc., this allows for a wide variation in the number of potential keys which can be used in a given implementation.

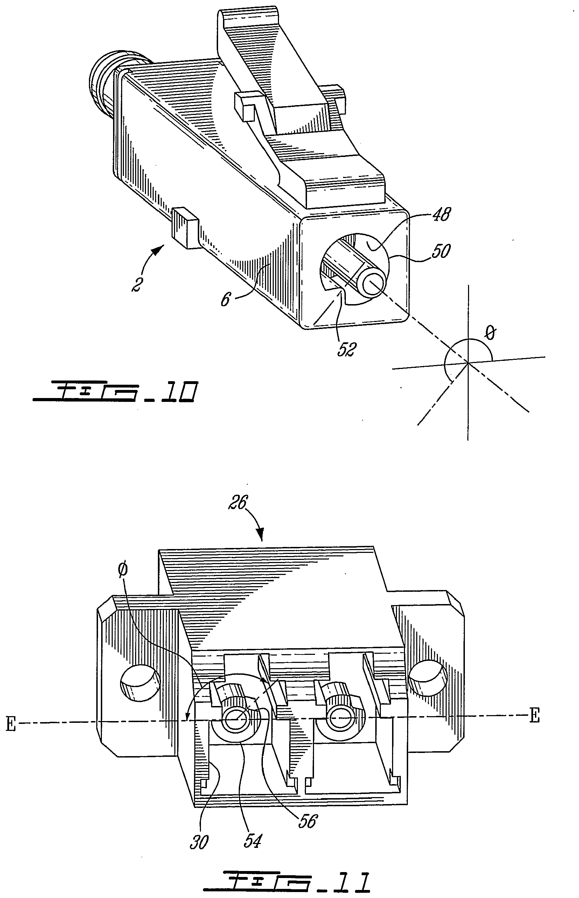

Referring now to Figure 10, a connector 2 in accordance with a second alternative embodiment is disclosed including a plug housing 6 having a cavity 48 therein, with the cavity 48 machined or moulded to comprise a generally circular section 50 and a protuberance 52 such as a ridge, tab or the like running axially along the inside of the cavity 48. Similar to the keying system as discussed hereinabove, the protuberance 52 is positioned along the inside of the cavity at the requisite keying angle *θ*. Referring now to Figure 11 in addition to Figure 10, a receptacle 26 comprised of one or more sockets 30 having raised bosses 54 is shown. The raised bosses 54 are moulded or machined to include an indentation 56, for example such as a notch, slot or flute, therein. Similar to the ridge 52, the indentation 56 is positioned on the raised boss 54 at a requisite keying angle *ϕ*.

It should be understood that although the protuberance 52 and corresponding indentation 56 have been portrayed as being symmetrically concave in cross-section, other shapes of cross-sections, for example a square or triangular notch, could also be applied in the context of the present invention. Additionally, the shapes could be asymmetric.

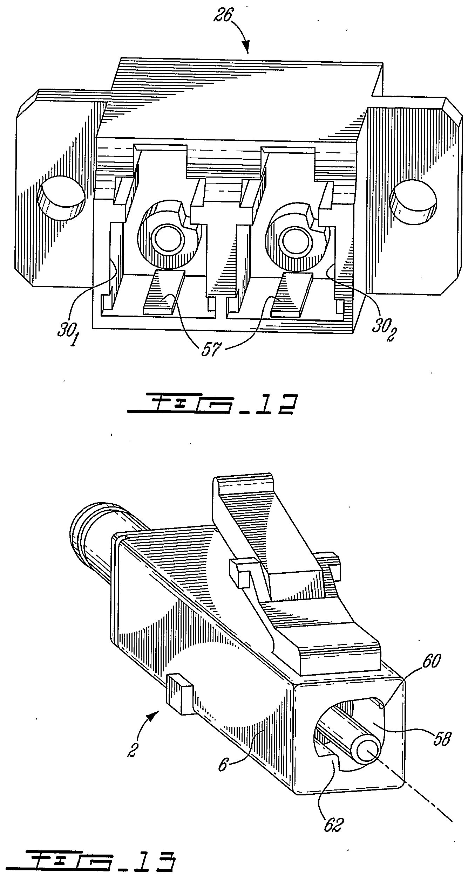

Referring now to Figure 12 in addition to Figure 11, in order to prevent a standard connector cable (not shown) from being inserted into a socket 30 keyed by a raised boss 54 having an indentation 56 therein, tabs 57 can be moulded or otherwise bonded to the inside of the sockets 30₁, 30₂ in the receptacle 26. In order for a connector to be inserted into a given socket 30₁ or 30₂ it will be necessary that the connector plug housing (not shown) be modified to include a suitable notch therein for reception of the tab 57.

Referring to Figure 13, a connector 2 in accordance with a third alternative illustrative embodiment of the present invention is disclosed. In this embodiment the plug housing 6 is machined or moulded to include a cavity 58 therein having both an indentation 60 and a protuberance 62 therein. The indentation 60 and a protuberance 62 are positioned within the cavity 58 at requisite keying angles as discussed hereinabove. Such a connector 2 would mate with a receptacle having a socket therein with a raised boss including both an indentation and a protuberance located at keying angles (all not shown) matching the keying angles of the indentation 60 and the protuberance 62 of the connector 2.

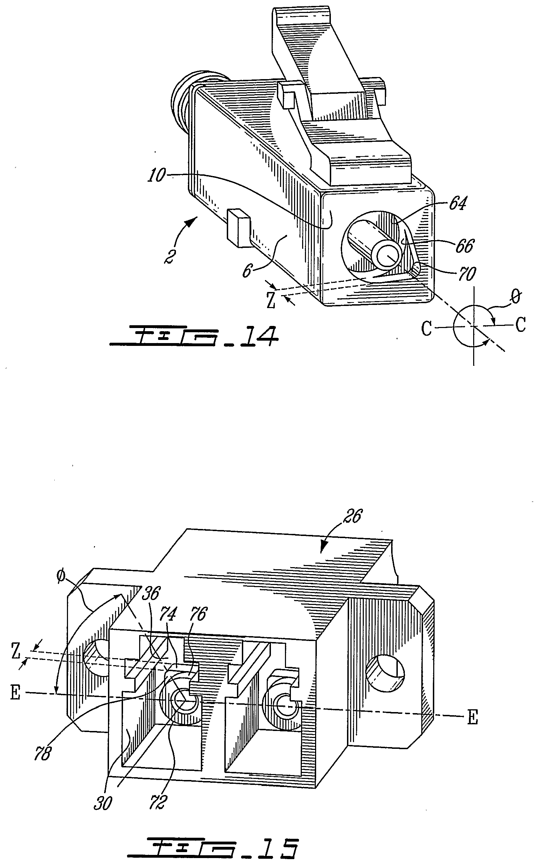

Referring to Figure 14, a connector 2 in accordance with a fourth alternative illustrative embodiment of the present invention is disclosed. In this embodiment the plug housing 6 is machined or moulded to include a cavity 64 having a cross-section which varies depending on the depth of the cavity 64. Illustratively, the cavity 64 is comprised of an inner aligning portion 66, illustratively cylindrical, and an outer portion 68 having an illustratively oval or egg-shaped cross-section with a depth Z and a keying portion 70. In line with the keyed connectors as already disclosed hereinabove, the keying portion 70 is positioned at a predetermined keying angle *θ* from the horizontal axis C.

Referring to Figure 15 in addition to Figure 14, the corresponding receptacle 26 is comprised of one or more sockets 30 having a raised boss 72 machined, moulded or other wise formed into a rear wall 36 thereof. The raised boss 72 is comprised of a lower portion 74 having an illustratively oval or egg-shaped cross-section and an upper aligning portion 76, illustratively cylindrical. Additionally, the lower portion 74 has a protruding keying portion 78 which is positioned at a predetermined keying angle *ϕ* from the horizontal axis E. As will now be apparent to a person of ordinary skill in the art, provided the keying angles *θ*, *ϕ* match, in order for the connector 2 to be inserted completely into the receptacle socket 30, the thickness Z of the lower portion 74 of the raised boss 72 must be the same or less than the depth Z of the upper portion 66 of the cavity 64.

Still referring to Figures 14 and 15, provided the keying angles *θ*, *ϕ* match and the thickness Z is the same as or less than the depth Z, when the plug housing 6 is inserted into the socket 30 of the receptacle 26, the cavity 64 will mate with the raised boss 72, thereby allowing the connector 2 to be securely fastened to the receptacle. If the keying angles *θ*, *ϕ* do not match, then illustratively the forward end 10 of the plug housing 6 will butt against the protruding keying portion 78 of the raised boss 72 thereby preventing correct insertion of the plug housing 6 in the socket 30. Similarly, if the thickness z is somewhat greater than the depth z then plug housing 6 will be prevented from being completely inserted into the socket 30, thereby preventing the flexible locking tab or latch 16 from being engaged.

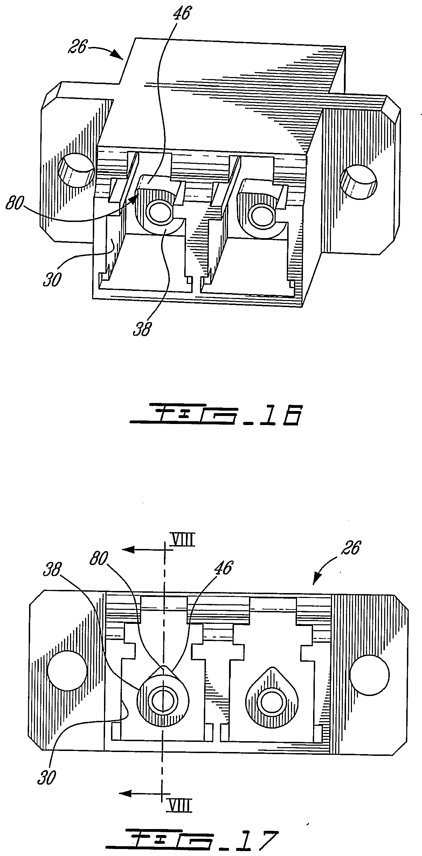

Referring now to Figures 16, 17 and 18, a receptacle 26 in accordance with a fifth alternative embodiment of the present invention will be disclosed. The receptacle 26 is similar as to described hereinabove with the difference that the receptacle keying portion 46 of the raised boss includes a bevelled or chamfered outer surface 80 in order to facilitate insertion of a connector (not shown) into the socket 30. Other types of surfaces, for example rounded, could also be implemented in order to facilitate insertion of a connector.

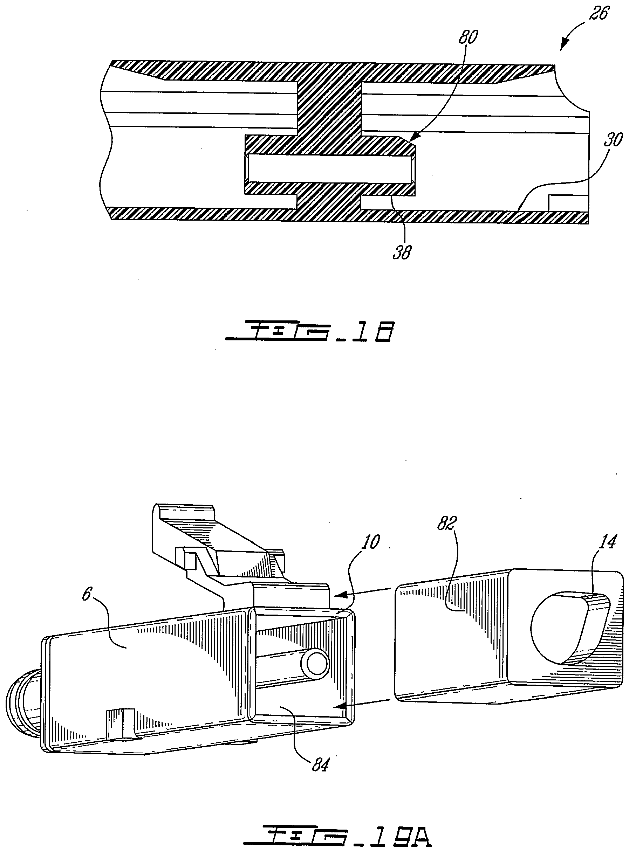

It is also foreseen that the present keying system be field configurable by the installer in order to provide connectors and receptacles with an installer selected keying. Referring to Figure 19A, for example, the cavity 14 would be provided in an interchangeable module 82 for insertion into a suitably adapted receiving cut out 84 in the forward end 10 of the plug housing 6. The module 82 would be held in place within the plug housing by clips, an adhesive or other suitable securing means.

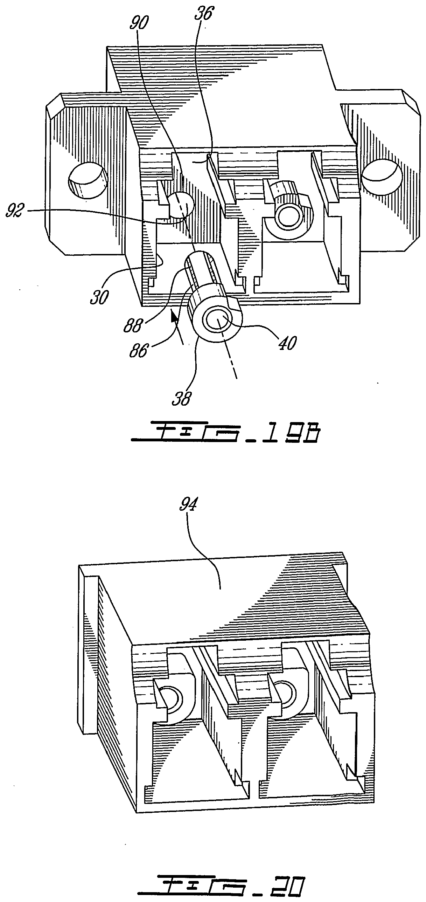

Referring to Figure 19B, alternatively the raised bosses 38 could be manufactured separately from the receptacle 26 and including a shaft 86 having a second geometry, for example a regular geometric form, such as a triangle, square, hexagon, octagon or the like, a series of grooves 88 therein. The shaft 86 would be rotated to the requisite receptacle keying angle and inserted in a shaft receiving opening 90 having a first geometry in the rear wall 36 of each socket 30 until the raised boss is in contact with the rear wall 36. The shaft receiving opening 90 could include, for example, a ridged inner surface 92 adapted to mate with the series of grooves 88 on the shaft 86. The shaft 86 could also be held in place within the shaft receiving opening 90 by an adhesive, for example.

Alternatively, the cavities and raised bosses of the invention could be modifiable and adaptable through removal from or addition to the cavities or raised bosses through the provision of a suitable tool (for example by cutting away a portion of a raised boss or fluting the inside of a cavity).

Referring to Figure 20, although the above invention has been described using BTW receptacles for interconnecting two connectors, in an embodiment not forming part of the invention the keying system could also be moulded into single sided receptacles 94 for mounting on active components, attenuators and the like (not shown).

## Claims

1. A keying system for providing selective interconnection between one of a set of related receptacle sockets (26) and one of a set of related connector plugs (2), each of the set of connector plugs terminating an optic fibre (4) held in a ferrule (12), each of the set of connector plugs adapted for insertion into a matching one of the set of receptacle sockets, wherein the keying system comprises:
a set of raised bosses (38), each of said bosses configured to one of a plurality of predefined boss keying geometries; and
a set of cavities (14), wherein each of said cavities with the ferrule (12) being disposed therein is configured to one of a plurality of predefined cavity keying geometries;
wherein a unique one of said set of bosses is in each of the set of receptacle sockets and a unique one of said set of cavities is in a forward end of each of the set of connector plugs;
wherein one of said predefined boss keying geometries matches one of said predefined cavity keying geometries; and
wherein when said boss keying geometry matches said cavity keying geometry, said boss can be inserted into said cavity thereby interconnecting said one of said set of connector plugs with said one of said set of receptacle sockets.

2. The keying system of Claim 1, **characterized in that** each of said set of bosses comprises a concentric portion and a keying portion (46) and each of said set of cavities comprises a concentric portion and a keying portion (24) .

3. The keying system of Claim 2, **characterized in that** said boss concentric portion and said cavity concentric portion have a circular cross-section of substantially the same diameter.

4. The keying system of Claim 2, **characterized in that** said boss keying portion comprises at least one protuberance and said cavity keying portion comprises at least one indentation.

5. The keying system of Claim 4, **characterized in that** said at least one protuberance comprises a chamfered outer surface (80).

6. The keying system of Claim 2, **characterized in that** said boss keying portion comprises at least one indentation and said cavity keying portion comprises at least one protuberance.

7. The keying system of Claim 4, **characterized in that** said at least one protuberance is a ridge and said at least one indentation is a notch.

8. The keying system of Claim 6, **characterized in that** said at least one protuberance is a ridge and said at least one indentation is a notch.

9. The keying system of Claim 2, **characterized in that** said boss keying portion comprises at least one protuberance and at least one indentation.

10. The keying system of Claim 1, **characterized in that** said cavity keying portion comprises at least one protuberance and at least one indentation.

11. The keying system of Claim 4, **characterized in that** said boss concentric portion further comprises an upper aligning portion (76) and said cavity concentric portion further comprises an inner aligning portion (66).

12. The keying system of Claim 4, **characterized in that** said at least one protuberance has a height which is substantially equal to a depth of said at least one indentation.

13. The keying system of Claim 2, **characterized in that** said keying portions are arranged at a predefined angle around a centre of said concentric portions.

14. The keying system of Claim 13, **characterized in that** said predefined angle is selected from the group consisting of 0°, 45°, 90°, 135°, 180°, 225°, 270° and 315°.

15. The keying system of Claim 2, **characterized in that** the receptacle socket further comprises an opening (90) in a rear wall (36) thereof and said boss further comprises a shaft (86), said opening adapted to receive said shaft.

16. The keying system of Claim 15, **characterized in that** said shaft is secured in said opening using an adhesive.

17. The keying system of Claim 15, **characterized in that** said opening comprises a first geometry and said shaft comprises a second geometry adapted to match said first geometry such that when said shaft is received in said opening, said shaft is prevented from rotating in said opening.

18. The keying system of Claim 17, **characterized in that** said first and second geometries are regular thereby allowing said shaft to be inserted into said opening at one of a plurality of predefined keying angles.

19. The keying system of Claim 18, **characterized in that** said predefined angle is selected from the group consisting of 0°, 45°, 90°, 135°, 180°, 225°, 270° and 315°.

20. The keying system of Claim 18, **characterized in that** said first and second geometries are selected from a group consisting of triangular, square, hexagonal and octagonal.

21. The keying system of Claim 18, **characterized in that** said first and second geometries are comprised of an equally spaced series of grooves and ridges.

22. The keying system of Claim 21, **characterized in that** said first and second geometries each comprise eight grooves and eight ridges.

23. The keying system of Claim 2, **characterized in that** the connector plug further comprises a cut-out (84) and a module (82), said unique one of said set of cavities being formed in said module, and wherein said cut-out is adapted to receive said module.

24. The keying system of Claim 23, **characterized in that** said module can be inserted into said cut-out at one of a plurality of predefined angles.

25. The keying system of Claim 23, **characterized in that** said cut-out is square.

26. The keying system of Claim 1, **characterized in that** the connector plug is an LC type connector plug and the receptacle socket is adapted to receive an LC type connector plug.

27. The keying system of Claim 1, **characterized in that** the connector plug is an SC type connector plug and the receptacle socket is adapted to receive an SC type connector plug.

28. The keying system of Claim 1, **characterized in that** the connector plug is an MU type connector plug and the receptacle socket is adapted to receive an MU type connector plug.

29. The keying system of Claim 1, **characterized in that** the connector plug is an FC type connector plug and the receptacle socket is adapted to receive an FC type connector plug.

30. The keying system of Claim 1, **characterized in that** each of said bosses further comprises an opening (40) therein, said opening adapted to receive the ferrule when one of said set of bosses is inserted into a matching one of said set of cavities.

31. The keying system of Claim 30, **characterized in that** the ferrule is coaxial with said cavity and the opening is coaxial with said boss.

32. The keying system of Claim 1, **characterized in that** the matching pairs of receptacles and connector plugs are identified using a common identifying code.

33. The keying system of Claim 32, **characterized in that** said common identifying code is a common colour.

34. A receptacle (26) for providing selective interconnection with one of a set of connector plugs (2), each of the connector plugs in the set comprising a cavity (14) having a unique cavity keying geometry formed in a forward end thereof and a fibre optic ferrule (8) disposed within the cavity, wherein the receptacle comprises:
at least one receptacle socket comprising a raised ferrule receiving boss (38) on a rear wall (36) thereof, said boss having a shape corresponding to one of a plurality of unique boss keying geometries, each unique cavity keying geometry corresponding to one of said unique boss keying geometries; and
wherein when said boss keying geometry corresponds to the unique cavity keying geometry, the connector plug can be inserted into said receptacle socket as said boss is received in the cavity and the ferrule inserted into said boss.

35. The receptacle of Claim 34, **characterized in that** said boss comprises a concentric portion and a keying portion (46).

36. The receptacle of Claim 35, **characterized in that** said concentric portion has a circular cross-section.

37. The receptacle of Claim 35, **characterized in that** said keying portion comprises at least one protuberance.

38. The receptacle of Claim 37, **characterized in that** said protuberance comprises a chamfered outer surface (80).

39. The receptacle of Claim 37, **characterized in that** said boss concentric portion further comprises an upper aligning portion (76).

40. The receptacle of Claim 39, **characterized in that** said at least one protuberance has a height which is less than a height of said upper aligning portion.

41. The receptacle of Claim 40, **characterized in that** said at least one protuberance has a height which is substantially half said upper aligning portion height.

42. The receptacle of Claim 37, **characterized in that** said at least one protuberance is a ridge.

43. The receptacle of Claim 35, **characterized in that** said boss keying portion comprises at least one indentation.

44. The receptacle of Claim 43, **characterized in that** said at least one indentation has a depth which is less than a height of said concentric portion.

45. The receptacle of Claim 44, **characterized in that** said indentation depth is substantially half said concentric portion height.

46. The receptacle of Claim 43, **characterized in that** said at least one indentation is a notch.

47. The receptacle of Claim 35, **characterized in that** said boss keying portion comprises at least one protuberance and at least one indentation.

48. The receptacle of Claim 37, **characterized in that** said boss further comprises an upper aligning portion (80).

49. The receptacle of Claim 35, **characterized in that** said keying portion is arranged at a predefined angle around a centre of said concentric portion.

50. The receptacle of Claim 49, **characterized in that** said predefined angle is selected from the group consisting of 0°, 45°, 90°, 135°, 180°, 225°, 270° and 315°.

51. The receptacle of Claim 34, **characterized in that** said at least one receptacle socket further comprises an opening (90) in a rear wall (36) thereof and each of said set of bosses further comprises a shaft (86), said opening adapted to receive said shaft.

52. The receptacle of Claim 51, **characterized in that** said shaft is secured in said opening using an adhesive.

53. The receptacle of Claim 51, **characterized in that** said opening comprises a first geometry and said shaft comprises a second geometry adapted to match said first geometry such that when said shaft is received in said opening, said shaft is prevented from rotating in said opening.

54. The receptacle of Claim 53, **characterized in that** said first and second geometries are regular thereby allowing said shaft to be inserted into said opening at one of a plurality of predefined keying angles.

55. The receptacle of Claim 54, **characterized in that** said predefined angle is selected from the group consisting of 0°, 45°, 90°, 135°, 180°, 225°, 270° and 315°.

56. The receptacle of Claim 53, **characterized in that** said first and second geometries are selected from a group consisting of triangular, square, hexagonal and octagonal.

57. The receptacle of Claim 53, **characterized in that** said first and second geometries are comprised of an equally spaced series of grooves and ridges.

58. The receptacle of Claim 57, **characterized in that** said first and second geometries each comprise eight grooves and eight ridges.

59. The receptacle of Claim 34, **characterized in that** said ferrule is coaxial with said cavity and said opening is coaxial with said boss.

60. The receptacle of Claim 34, **characterized in that** said at least one receptacle socket is adapted to receive an LC type connector plug.

61. The receptacle of Claim 34, **characterized in that** said at least one receptacle socket is adapted to receive an SC type connector plug.

62. The receptacle of Claim 34, **characterized in that** said at least one receptacle socket is adapted to receive an MU type connector plug.

63. The receptacle of Claim 34, **characterized in that** said at least one receptacle socket is adapted to receive an FC type connector plug.

64. The receptacle of Claim 34, **characterized in that** said at least one receptacle socket terminates a second optic fibre, and wherein when the connector plug is inserted into said receptacle socket, the first optic fibre is brought into axial alignment with said second optic fibre.

65. The receptacle of Claim 64, **characterized in that** when the connector plug is inserted into said receptacle socket, an exposed end of the first optic fibre is brought into contact with an exposed end of said second optic fibre.

66. The receptacle of Claim 34, **characterized in that** said boss geometry is such that a non-keyed connector plug can be inserted in said receptacle socket.

67. A connector terminating an optic fibre (4) for providing selective interconnection with one of a set of receptacle sockets (26), each of the receptacle sockets in the set comprising a raised ferrule (12) receiving boss (38) on a rear wall (36) thereof having a unique boss keying geometry, wherein the connector comprises:
a connector plug (2) adapted for insertion into the set of receptacle sockets and comprising a cavity (14), said cavity with the ferrule (12) being disposed therein having one of a plurality of unique cavity keying geometries formed in a forward end thereof, each unique boss keying geometry corresponding to a respective one of said unique cavity keying geometries; and
wherein when the unique boss keying geometry corresponds to said cavity keying geometry, said connector plug can be inserted into the receptacle socket as the boss is received in said cavity and said ferrule inserted into the boss.

68. The connector of Claim 67, **characterized in that** said cavity comprises a concentric portion and a keying portion (24).

69. The connector of Claim 68, **characterized in that** said concentric portion has a circular cross-section.

70. The connector of Claim 68, **characterized in that** said keying portion comprises at least one indentation.

71. The connector of Claim 70, **characterized in that** said concentric portion further comprises an aligning portion (66).

72. The connector of Claim 71, **characterized in that** a depth of said at least one indentation is less than a depth of said aligning portion.

73. The connector of Claim 72, **characterized in that** said indentation depth is substantially half said aligning portion depth.

74. The connector of Claim 68, **characterized in that** said keying portion comprises at least one protuberance.

75. The connector of Claim 74, **characterized in that** said at least one protuberance is chamfered.

76. The connector of Claim 74, **characterized in that** said concentric portion further comprises an aligning portion.

77. The connector of Claim 76, **characterized in that** a height of said at least one protuberance is less than a depth of said aligning portion.

78. The connector of Claim 77, **characterized in that** said protuberance height is substantially half of said aligning portion depth.

79. The connector of Claim 70, **characterized in that** said at least one indentation is a notch.

80. The connector of Claim 74, **characterized in that** said at least one protuberance is a ridge.

81. The connector of Claim 68, **characterized in that** said keying portion comprises at least one protuberance and at least one indentation.

82. The connector of Claim 68, **characterized in that** said keying portion is arranged at a predefined angle around a centre of said concentric portion.

83. The connector of Claim 82, **characterized in that** said predefined angle is selected from the group consisting of 0°, 45°, 90°, 135°, 180°, 225°, 270° and 315°.

84. The connector of Claim 67, **characterized in that** said connector plug further comprises a cut-out (84) and a module (82), said unique cavity keying geometry being formed in said module, and wherein said cut-out is adapted to receive said module.

85. The connector of Claim 84, **characterized in that** said module can be inserted into said cut-out at one of a plurality of predefined angles.

86. The connector of Claim 84, **characterized in that** said module is secured in said cut-out using an adhesive.

87. The connector of Claim 84, **characterized in that** said cut-out is square.

88. The connector of Claim 67, **characterized in that** said connector plug is an LC type connector plug.

89. The connector of Claim 67, **characterized in that** said connector plug is an SC type connector plug.

90. The connector of Claim 67, **characterized in that** said connector plug is an MU type connector plug.

91. The connector of Claim 67, **characterized in that** said connector plug is an FC type connector plug.

## Patentansprüche

1. Schlüsselsystem zum Bereitstellen einer selektiven Verbindung zwischen einem Satz passender Steckbuchsenplätze (26) und einem von einem Satz passender Verbinderstecker (2), wobei jedes von dem Satz an Verbindersteckern eine optische Faser (4) terminieren, die in einer Aderendhülse (12) gehalten wird, wobei jedes von dem Satz an Verbindersteckern auf das Einstecken in einen passenden der Steckbuchsenplätze ausgelegt ist, wobei das Schlüsselsystem aufweist:
einen Satz erhabener Naben (3 8), wobei jede der Naben auf eine aus einer Mehrzahl an vordefinierten Nabenschlüsselgeometrien konfiguriert ist; und
einen Satz Kavitäten (14), wobei jede der Kavitäten mit der Aderendhülse (12), die sich darin befindet, auf eine aus einer Mehrzahl an vordefinierten Nabenschlüsselgeometrien konfiguriert ist;
wobei sich eine einzigartige aus dem Satz Naben in jedem von dem Satz an Steckbuchsenplätzen befindet und sich eine einzigartige aus dem Satz Kavitäten in einem vorderen Ende von jedem aus dem Satz an Verbindersteckern befindet;
wobei eine von den vordefinierten Nabenschlüsselgeometrien zu einer von den vordefinierten Kavitätsschlüsselgeometrien passt; und
wobei, wenn die Nabenschlüsselgeometrie zu der Kavitätsschlüsselgeometrie passt, die Nabe in die Kavität eingeführt werden kann, wodurch der eine von dem Satz an Verbindersteckern mit dem einen von dem Satz an Steckbuchsenplätzen verbunden wird.

2. Schlüsselsystem nach Anspruch 1, **dadurch gekennzeichnet, dass** jede von dem Satz an Naben einen konzentrischen Abschnitt und einen Schlüsselabschnitt (46) aufweist und jede von dem Satz an Kavitäten einen konzentrischen Abschnitt und einen Schlüsselabschnitt (24) aufweist.

3. Schlüsselsystem nach Anspruch 2, **dadurch gekennzeichnet, dass** der konzentrische Abschnitt der Nabe und der konzentrische Abschnitt der Kavität einen kreisrunden Querschnitt mit einem im Wesentlichen identischen Durchmesser aufweisen.

4. Schlüsselsystem nach Anspruch 2, **dadurch gekennzeichnet, dass** der Nabenschlüsselabschnitt zumindest eine Protuberanz aufweist und der Kavitätsschlüsselabschnitt zumindest eine Vertiefung aufweist.

5. Schlüsselsystem nach Anspruch 4, **dadurch gekennzeichnet, dass** die zumindest eine Protuberanz eine abgeschrägte Außenoberfläche (80) aufweist.

6. Schlüsselsystem nach Anspruch 2, **dadurch gekennzeichnet, dass** der Nabenschlüsselabschnitt zumindest eine Vertiefung aufweist und der Kavitätsschlüsselabschnitt zumindest eine Protuberanz aufweist.

7. Schlüsselsystem nach Anspruch 4, **dadurch gekennzeichnet, dass** die zumindest eine Protuberanz ein Grat ist und die zumindest eine Vertiefung eine Kerbe ist.

8. Schlüsselsystem nach Anspruch 6, **dadurch gekennzeichnet, dass** die zumindest eine Protuberanz ein Grat ist und die zumindest eine Vertiefung eine Kerbe ist.

9. Schlüsselsystem nach Anspruch 2, **dadurch gekennzeichnet, dass** der Nabenschlüsselabschnitt zumindest eine Protuberanz und zumindest eine Vertiefung aufweist.

10. Schlüsselsystem nach Anspruch 1, **dadurch gekennzeichnet, dass** der Kavitätsschlüsselabschnitt zumindest eine Protuberanz und zumindest eine Vertiefung aufweist.

11. Schlüsselsystem nach Anspruch 4, **dadurch gekennzeichnet, dass** der konzentrische Abschnitt der Nabe ferner einen oberen Ausrichtungsabschnitt (76) aufweist und der konzentrische Abschnitt der Kavität ferner einen inneren Ausrichtungsabschnitt (66) aufweist.

12. Schlüsselsystem nach Anspruch 4, **dadurch gekennzeichnet, dass** die zumindest eine Protuberanz eine Höhe aufweist, die im Wesentlichen einer Tiefe der zumindest einen Vertiefung entspricht.

13. Schlüsselsystem nach Anspruch 2, **dadurch gekennzeichnet, dass** die Schlüsselabschnitte in einem vordefinierten Winkel um ein Zentrum der konzentrischen Abschnitte angeordnet sind.

14. Schlüsselsystem nach Anspruch 13, **dadurch gekennzeichnet, dass** der vordefinierte Winkel aus der Gruppe ausgewählt ist, die aus 0°, 45°, 90°, 135°, 180°, 225°, 270° und 315° besteht.

15. Schlüsselsystem nach Anspruch 2, **dadurch gekennzeichnet, dass** der Steckbuchsenplatz ferner eine Öffnung (90) in einer hinteren Wand (36) desselben aufweist und die Nabe ferner eine Welle (86) aufweist, wobei die Öffnung darauf ausgelegt ist, die Welle aufzunehmen.

16. Schlüsselsystem nach Anspruch 15, **dadurch gekennzeichnet, dass** die Welle mit einem Adhäsiv in der Öffnung befestigt ist.

17. Schlüsselsystem nach Anspruch 15, **dadurch gekennzeichnet, dass** die Öffnung eine erste Geometrie aufweist und die Welle eine zweite Geometrie aufweist, die darauf ausgelegt ist, so zu der ersten Geometrie zu passen, dass, wenn sich die Welle in der Öffnung befindet, verhindert wird, dass die Welle in der Öffnung rotiert.

18. Schlüsselsystem nach Anspruch 17, **dadurch gekennzeichnet, dass** die ersten und zweiten Geometrien regulär sind, wodurch es der Welle ermöglicht wird, in die Öffnung in einem aus einer Mehrzahl an vordefinierten Schlüsselwinkeln eingeführt zu werden.

19. Schlüsselsystem nach Anspruch 18, **dadurch gekennzeichnet, dass** der vordefinierte Winkel aus der Gruppe ausgewählt ist, die aus 0°, 45°, 90°, 135°, 180°, 225°, 270° und 315° besteht.

20. Schlüsselsystem nach Anspruch 18, **dadurch gekennzeichnet, dass** die ersten und zweiten Geometrien aus einer Gruppe ausgewählt sind, die aus dreieckig, quadratisch, hexagonal und oktogonal besteht.

21. Schlüsselsystem nach Anspruch 18, **dadurch gekennzeichnet, dass** die ersten und zweiten Geometrien aus einer Serie von Rillen und Graten mit identischen Abständen bestehen.

22. Schlüsselsystem nach Anspruch 21, **dadurch gekennzeichnet, dass** die ersten und zweiten Geometrien jeweils acht Rillen und 8 Grate aufweisen.

23. Schlüsselsystem nach Anspruch 2, **dadurch gekennzeichnet, dass** der Verbinderstecker ferner einen Ausschnitt (84) und ein Modul (82) aufweist, wobei die einzigartige von dem Satz an Kavitäten in dem Modul ausgebildet ist, und wobei der Ausschnitt darauf ausgelegt ist, das Modul aufzunehmen.

24. Schlüsselsystem nach Anspruch 23, **dadurch gekennzeichnet, dass** das Modul in einem von der Mehrzahl an vordefinierten Winkeln in den Ausschnitt eingeführt werden kann.

25. Schlüsselsystem nach Anspruch 23, **dadurch gekennzeichnet, dass** der Ausschnitt quadratisch ist.

26. Schlüsselsystem nach Anspruch 1, **dadurch gekennzeichnet, dass** der Verbinderstecker ein LC-Verbinderstecker ist und der Steckbuchsenplatz darauf ausgelegt ist, einen LC-Verbinderstecker aufzunehmen.

27. Schlüsselsystem nach Anspruch 1, **dadurch gekennzeichnet, dass** der Verbinderstecker ein SC-Verbinderstecker ist und der Steckbuchsenplatz darauf ausgelegt ist, einen SC-Verbinderstecker aufzunehmen.

28. Schlüsselsystem nach Anspruch 1, **dadurch gekennzeichnet, dass** der Verbinderstecker ein MU-Verbinderstecker ist und der Steckbuchsenplatz darauf ausgelegt ist, einen MU-Verbinderstecker aufzunehmen.

29. Schlüsselsystem nach Anspruch 1, **dadurch gekennzeichnet, dass** der Verbinderstecker ein FC-Verbinderstecker ist und der Steckbuchsenplatz darauf ausgelegt ist, einen FC-Verbinderstecker aufzunehmen.

30. Schlüsselsystem nach Anspruch 1, **dadurch gekennzeichnet, dass** jede der Naben ferner eine Öffnung (40) darin aufweist, wobei die Öffnung darauf ausgelegt ist, die Aderendhülse aufzunehmen, wenn eine von dem Satz Naben in eine passende von dem Satz Kavitäten eingeführt wird.

31. Schlüsselsystem nach Anspruch 30, **dadurch gekennzeichnet, dass** die Aderendhülse zu der Kavität koaxial ist und die Öffnung zu der Nabe koaxial ist.

32. Schlüsselsystem nach Anspruch 1, **dadurch gekennzeichnet, dass** die passenden Paare von Steckbuchsenplätzen und Verbindersteckern mithilfe eines gemeinsamen Identifikationscodes identifiziert werden.

33. Schlüsselsystem nach Anspruch 32, **dadurch gekennzeichnet, dass** der gemeinsame Identifikationscode eine gemeinsame Farbe ist.

34. Steckbuchsenplatz (26) zum Bereitstellen einer selektiven Verbindung mit einem von einem Satz an Verbindersteckern (2), wobei jeder der Verbinderstecker in dem Satz eine Kavität (14) aufweist, die eine einzigartige Kavitätsschlüsselgeometrie, die in einem vorderen Ende derselben ausgebildet ist, und eine Aderendhülse (8) für eine optische Faser, die sich in der Kavität befindet, aufweist, wobei der Steckbuchsenplatz aufweist:
zumindest einen Steckbuchsenplatz, der eine erhabene Aderendhülsenaufnahmenabe (38) auf einer hinteren Wand derselben (36) aufweist, wobei die Nabe eine Form aufweist, die einer aus einer Mehrzahl an einzigartigen Nabenschlüsselgeometrien entspricht, wobei jede einzigartige Kavitätsschlüsselgeometrie einer von den einzigartigen Nabenschlüsselgeometrien entspricht; und
wobei, wenn die Nabenschlüsselgeometrie der einzigartigen Kavitätsschlüsselgeometrie entspricht, der Verbinderstecker in den Steckbuchsenplatz eingeführt werden kann, da die Nabe in der Kavität aufgenommen ist und die Aderendhülse in die Nabe eingeführt ist.

35. Steckbuchsenplatz nach Anspruch 34, **dadurch gekennzeichnet, dass** die Nabe einen konzentrischen Abschnitt und einen Schlüsselabschnitt (46) aufweist.

36. Steckbuchsenplatz nach Anspruch 35, **dadurch gekennzeichnet, dass** der konzentrische Abschnitt einen kreisrunden Querschnitt aufweist.

37. Steckbuchsenplatz nach Anspruch 35, **dadurch gekennzeichnet, dass** der Schlüsselabschnitt zumindest eine Protuberanz aufweist.

38. Steckbuchsenplatz nach Anspruch 37, **dadurch gekennzeichnet, dass** die Protuberanz eine abgeschrägte Außenoberfläche (80) aufweist.

39. Steckbuchsenplatz nach Anspruch 37, **dadurch gekennzeichnet, dass** der konzentrische Abschnitt der Nabe ferner einen oberen Ausrichtungsabschnitt (76) aufweist.

40. Steckbuchsenplatz nach Anspruch 39, **dadurch gekennzeichnet, dass** die zumindest eine Protuberanz eine Höhe aufweist, die niedriger ist als eine Höhe des oberen Ausrichtungsabschnitts.

41. Steckbuchsenplatz nach Anspruch 40, **dadurch gekennzeichnet, dass** die zumindest eine Protuberanz eine Höhe aufweist, die im Wesentlichen die Hälfte der Höhe des oberen Ausrichtungsabschnitts beträgt.

42. Steckbuchsenplatz nach Anspruch 37, **dadurch gekennzeichnet, dass** die zumindest eine Protuberanz ein Grat ist.

43. Steckbuchsenplatz nach Anspruch 35, **dadurch gekennzeichnet, dass** der Nabenschlüsselabschnitt zumindest eine Vertiefung aufweist.

44. Steckbuchsenplatz nach Anspruch 43, **dadurch gekennzeichnet, dass** die zumindest eine Vertiefung eine Tiefe aufweist, die geringer ist als eine Höhe des konzentrischen Abschnitts.

45. Steckbuchsenplatz nach Anspruch 44, **dadurch gekennzeichnet, dass** die Vertiefungstiefe im Wesentlichen die Hälfte der Höhe des konzentrischen Abschnitts beträgt.

46. Steckbuchsenplatz nach Anspruch 43, **dadurch gekennzeichnet, dass** die zumindest eine Vertiefung eine Kerbe ist.

47. Steckbuchsenplatz nach Anspruch 35, **dadurch gekennzeichnet, dass** der Nabenschlüsselabschnitt zumindest eine Protuberanz und zumindest eine Vertiefung aufweist.

48. Steckbuchsenplatz nach Anspruch 37, **dadurch gekennzeichnet, dass** die Nabe ferner einen oberen Ausrichtungsabschnitt (80) aufweist.

49. Steckbuchsenplatz nach Anspruch 35, **dadurch gekennzeichnet, dass** der Schlüsselabschnitt in einem vordefinierten Winkel um ein Zentrum des konzentrischen Abschnitts angeordnet ist.

50. Steckbuchsenplatz nach Anspruch 49, **dadurch gekennzeichnet, dass** der vordefinierte Winkel aus der Gruppe ausgewählt ist, die aus 0°, 45°, 90°, 135°, 180°, 225°, 270° und 315° besteht.

51. Steckbuchsenplatz nach Anspruch 34, **dadurch gekennzeichnet, dass** der zumindest eine Steckbuchsenplatz ferner eine Öffnung (90) in einer hinteren Wand (36) desselben aufweist und jede von dem Satz Naben ferner eine Welle (86) aufweist, wobei die Öffnung darauf ausgelegt ist, die Welle aufzunehmen.

52. Steckbuchsenplatz nach Anspruch 51, **dadurch gekennzeichnet, dass** die Welle mit einem Adhäsiv in der Öffnung befestigt ist.

53. Steckbuchsenplatz nach Anspruch 51, **dadurch gekennzeichnet, dass** die Öffnung eine erste Geometrie aufweist und die Welle eine zweite Geometrie aufweist, die darauf ausgelegt ist, so zu der ersten Geometrie zu passen, dass, wenn sich die Welle in der Öffnung befindet, verhindert wird, dass die Welle in der Öffnung rotiert.

54. Steckbuchsenplatz nach Anspruch 53, **dadurch gekennzeichnet, dass** die ersten und zweiten Geometrien regulär sind, wodurch es der Welle ermöglicht wird, in die Öffnung in einem aus einer Mehrzahl an vordefinierten Schlüsselwinkeln eingeführt zu werden.

55. Steckbuchsenplatz nach Anspruch 54, **dadurch gekennzeichnet, dass** der vordefinierte Winkel aus der Gruppe ausgewählt ist, die aus 0°, 45°, 90°, 135°, 180°, 225°, 270° und 315° besteht.

56. Steckbuchsenplatz nach Anspruch 53, **dadurch gekennzeichnet, dass** die ersten und zweiten Geometrien aus einer Gruppe ausgewählt sind, die aus dreieckig, quadratisch, hexagonal und oktogonal besteht.

57. Steckbuchsenplatz nach Anspruch 53, **dadurch gekennzeichnet, dass** die ersten und zweiten Geometrien aus einer Serie von Rillen und Graten mit identischen Abständen bestehen.

58. Steckbuchsenplatz nach Anspruch 57, **dadurch gekennzeichnet, dass** die ersten und zweiten Geometrien jeweils acht Rillen und 8 Grate aufweisen.

59. Steckbuchsenplatz nach Anspruch 34, **dadurch gekennzeichnet, dass** die Aderendhülse zu der Kavität koaxial ist und die Öffnung zu der Nabe koaxial ist.

60. Steckbuchsenplatz nach Anspruch 34, **dadurch gekennzeichnet, dass** der zumindest eine Steckbuchsenplatz darauf ausgelegt ist, einen LC-Verbinderstecker aufzunehmen.

61. Steckbuchsenplatz nach Anspruch 34, **dadurch gekennzeichnet, dass** der zumindest eine Steckbuchsenplatz darauf ausgelegt ist, einen SC-Verbinderstecker aufzunehmen.

62. Steckbuchsenplatz nach Anspruch 34, **dadurch gekennzeichnet, dass** der zumindest eine Steckbuchsenplatz darauf ausgelegt ist, einen MU-Verbinderstecker aufzunehmen.

63. Steckbuchsenplatz nach Anspruch 34, **dadurch gekennzeichnet, dass** der zumindest eine Steckbuchsenplatz darauf ausgelegt ist, einen FC-Verbinderstecker aufzunehmen.

64. Steckbuchsenplatz nach Anspruch 34, **dadurch gekennzeichnet, dass** der zumindest eine Steckbuchsenplatz eine zweite optische Faser terminiert, und wobei, wenn der Verbinderstecker in den Steckbuchsenplatz eingeführt ist, die erste optische Faser in eine axiale Ausrichtung mit der zweiten optischen Faser gebracht wird.

65. Steckbuchsenplatz nach Anspruch 64, **dadurch gekennzeichnet, dass**, wenn der Verbinderstecker in den Steckbuchsenplatz eingeführt ist, ein freiliegendes Ende der ersten optischen Faser mit einem freiliegenden Ende der zweiten optischen Faser in Kontakt gebracht wird.

66. Steckbuchsenplatz nach Anspruch 34, **dadurch gekennzeichnet, dass** die Nabengeometrie dergestalt ausgebildet ist, dass ein nicht geschlüsselter Verbinderstecker in den Steckbuchsenplatz eingeführt werden kann.

67. Stecker, der eine optische Faser (4) terminiert, um eine selektive Verbindung mit einem aus einem Satz von Steckbuchsenplätzen (26) herzustellen, wobei jeder der Steckbuchsenplätze in dem Satz eine erhabene Aderendhülse (12) aufweist, die eine Nabe (38) auf einer hinteren Wand (36) derselben aufnimmt, die eine einzigartige Nabenschlüsselgeometrie aufweist, wobei der Stecker aufweist:
einen Verbinderstecker (2), der darauf ausgelegt ist, in den Satz von Steckbuchsenplätzen eingeführt zu werden und der eine Kavität (4) aufweist, wobei die Kavität mit der Aderendhülse (12), die sich darin befindet, eine von einer Mehrzahl an einzigartigen Kavitätsschlüsselgeometrien aufweist, die in einem vorderen Ende derselben ausgebildet sind, wobei jede einzigartige Nabenschlüsselgeometrie einer entsprechenden der einzigartigen Kavitätsschlüsselgeometrien entspricht; und
wobei, wenn die einzigartige Nabenschlüsselgeometrie der Kavitätsschlüsselgeometrie entspricht, der Verbinderstecker in den Steckbuchsenplatz eingeführt werden kann, da die Nabe in der Kavität aufgenommen ist und die Aderendhülse in die Nabe eingeführt ist.

68. Stecker nach Anspruch 67, **dadurch gekennzeichnet, dass** die Kavität einen konzentrischen Abschnitt und einen Schlüsselabschnitt (24) aufweist.

69. Stecker nach Anspruch 68, **dadurch gekennzeichnet, dass** der konzentrische Abschnitt einen kreisrunden Querschnitt aufweist.

70. Stecker nach Anspruch 68, **dadurch gekennzeichnet, dass** der Schlüsselabschnitt zumindest eine Vertiefung aufweist.

71. Stecker nach Anspruch 70, **dadurch gekennzeichnet, dass** der konzentrische Abschnitt ferner einen Ausrichtungsabschnitt (66) aufweist.

72. Stecker nach Anspruch 71, **dadurch gekennzeichnet, dass** eine Tiefe der zumindest einen Vertiefung geringer ist als eine Tiefe des Ausrichtungsabschnitts.

73. Stecker nach Anspruch 72, **dadurch gekennzeichnet, dass** die Tiefe der Vertiefung im Wesentlichen die Hälfte der Tiefe des Ausrichtungsabschnitts beträgt.

74. Stecker nach Anspruch 68, **dadurch gekennzeichnet, dass** der Schlüsselabschnitt zumindest eine Protuberanz aufweist.

75. Stecker nach Anspruch 74, **dadurch gekennzeichnet, dass** die zumindest eine Protuberanz abgeschrägt ist.

76. Stecker nach Anspruch 74, **dadurch gekennzeichnet, dass** der konzentrische Abschnitt ferner einen Ausrichtungsabschnitt aufweist.

77. Stecker nach Anspruch 76, **dadurch gekennzeichnet, dass** eine Höhe der zumindest einen Protuberanz geringer ist als eine Tiefe des Ausrichtungsabschnitts.

78. Stecker nach Anspruch 77, **dadurch gekennzeichnet, dass** die Höhe der Protuberanz im Wesentlichen die Hälfte der Tiefe des Ausrichtungsabschnitts beträgt.

79. Stecker nach Anspruch 70, **dadurch gekennzeichnet, dass** die zumindest eine Vertiefung eine Kerbe ist.

80. Stecker nach Anspruch 74, **dadurch gekennzeichnet, dass** die zumindest eine Protuberanz ein Grat ist.

81. Stecker nach Anspruch 68, **dadurch gekennzeichnet, dass** der Schlüsselabschnitt zumindest eine Protuberanz und zumindest eine Vertiefung aufweist.

82. Stecker nach Anspruch 68, **dadurch gekennzeichnet, dass** der Schlüsselabschnitt in einem vordefinierten Winkel um ein Zentrum des konzentrischen Abschnitts angeordnet ist.

83. Stecker nach Anspruch 82, **dadurch gekennzeichnet, dass** der vordefinierte Winkel aus der Gruppe ausgewählt ist, die aus 0°, 45°, 90°, 135°, 180°, 225°, 270° und 315° besteht.

84. Stecker nach Anspruch 67, **dadurch gekennzeichnet, dass** der Verbinderstecker ferner einen Ausschnitt (84) und ein Modul (82) aufweist, wobei die einzigartige Kavitätsschlüsselgeometrie in dem Modul ausgebildet ist, und wobei der Ausschnitt darauf ausgelegt ist, das Modul aufzunehmen.

85. Stecker nach Anspruch 84, **dadurch gekennzeichnet, dass** das Modul in einem von der Mehrzahl an vordefinierten Winkeln in den Ausschnitt eingeführt werden kann.

86. Stecker nach Anspruch 84, **dadurch gekennzeichnet, dass** das Modul mit einem Adhäsiv in dem Ausschnitt befestigt ist.

87. Stecker nach Anspruch 84, **dadurch gekennzeichnet, dass** der Ausschnitt quadratisch ist.

88. Stecker nach Anspruch 67, **dadurch gekennzeichnet, dass** der Verbinderstecker ein LC-Verbinderstecker ist.

89. Stecker nach Anspruch 67, **dadurch gekennzeichnet, dass** der Verbinderstecker ein SC-Verbinderstecker ist.

90. Stecker nach Anspruch 67, **dadurch gekennzeichnet, dass** der Verbinderstecker ein MU-Verbinderstecker ist.

91. Stecker nach Anspruch 67, **dadurch gekennzeichnet, dass** der Verbinderstecker ein FC-Verbinderstecker ist.

## Revendications

1. Système de détrompage pour fournir une interconnexion sélective entre l'une d'un ensemble de prises de réceptacle associées (26) et l'une d'un ensemble de fiches de connecteur associées (2), chacune de l'ensemble de fiches de connecteur terminant une fibre optique (4) maintenue dans une virole (12), chacune de l'ensemble de fiches de connecteur étant apte à être insérée dans l'une correspondante de l'ensemble de prises de réceptacle, dans lequel le système de détrompage comprend :
un ensemble de bossages en relief (38), chacun desdits bossages étant configuré à l'une d'une pluralité de géométries prédéfinies de détrompage de bossage ; et
un ensemble de cavités (14), dans lequel chacune desdites cavités avec la virole (12) étant disposée à l'intérieur de celle-ci est configurée à l'une d'une pluralité de géométries prédéfinies de détrompage de cavité ;
dans lequel un bossage unique dudit ensemble de bossages se trouve dans chacune de l'ensemble de prises de réceptacle et une cavité unique dudit ensemble de cavités se trouve à une extrémité avant de chacune de l'ensemble de prises de connecteur ;
dans lequel l'une desdites géométries prédéfinies de détrompage de bossage correspond à l'une desdites géométries prédéfinies de détrompage de cavité ; et
dans lequel, lorsque ladite géométrie de détrompage de bossage correspond à ladite géométrie de détrompage de cavité, ledit bossage peut être inséré dans ladite cavité en interconnectant de ce fait ladite une fiche dudit ensemble de fiches de connecteur avec ladite une prise dudit ensemble de prises de réceptacle.

2. Système de détrompage selon la revendication 1, **caractérisé en ce que** chacun dudit ensemble de bossages comprend une portion concentrique et une portion de détrompage (46) et chacune dudit ensemble de cavités comprend une portion concentrique et une portion de détrompage (24).

3. Système de détrompage selon la revendication 2, **caractérisé en ce que** ladite portion concentrique de bossage et ladite portion concentrique de cavité ont une coupe transversale circulaire ayant sensiblement le même diamètre.

4. Système de détrompage selon la revendication 2, **caractérisé en ce que** ladite portion de détrompage de bossage comprend au moins une protubérance et ladite portion de détrompage de cavité comprend au moins une indentation.

5. Système de détrompage selon la revendication 4, **caractérisé en ce que** ladite au moins une protubérance comprend une surface extérieure biseautée (80).

6. Système de détrompage selon la revendication 2, **caractérisé en ce que** ladite portion de détrompage de bossage comprend au moins une indentation et ladite portion de détrompage de cavité comprend au moins une protubérance.

7. Système de détrompage selon la revendication 4, **caractérisé en ce que** ladite au moins une protubérance est une arête et ladite au moins une indentation est une encoche.

8. Système de détrompage selon la revendication 6, **caractérisé en ce que** ladite au moins une protubérance est une arête et ladite au moins une indentation est une encoche.

9. Système de détrompage selon la revendication 2, **caractérisé en ce que** ladite portion de détrompage de bossage comprend au moins une protubérance et au moins une indentation.

10. Système de détrompage selon la revendication 1, **caractérisé en ce que** ladite portion de détrompage de cavité comprend au moins une protubérance et au moins une indentation.

11. Système de détrompage selon la revendication 4, **caractérisé en ce que** ladite portion concentrique de bossage comprend en outre une portion d'alignement supérieure (76) et ladite portion concentrique de cavité comprend en outre une portion d'alignement intérieure (66).

12. Système de détrompage selon la revendication 4, **caractérisé en ce que** ladite au moins une protubérance présente une hauteur qui est sensiblement égale à une profondeur de ladite au moins une indentation.

13. Système de détrompage selon la revendication 2, **caractérisé en ce que** lesdites portions de détrompage sont agencées à un angle prédéfini autour d'un centre desdites portions concentriques.

14. Système de détrompage selon la revendication 13, **caractérisé en ce que** ledit angle prédéfini est sélectionné dans le groupe se composant de 0°, 45°, 90°, 135°, 180°, 225°, 270° et 315°.

15. Système de détrompage selon la revendication 2, **caractérisé en ce que** la prise de réceptacle comprend en outre une ouverture (90) dans une paroi arrière (36) de celle-ci et ledit bossage comprend en outre un arbre (86), ladite ouverture étant apte à recevoir ledit arbre.

16. Système de détrompage selon la revendication 15, **caractérisé en ce que** ledit arbre est fixé dans ladite ouverture en utilisant un adhésif.

17. Système de détrompage selon la revendication 15, **caractérisé en ce que** ladite ouverture comprend une première géométrie et ledit arbre comprend une deuxième géométrie apte à correspondre à ladite première géométrie de sorte que, lorsque ledit arbre est reçu dans ladite ouverture, ledit arbre est empêché de tourner dans ladite ouverture.

18. Système de détrompage selon la revendication 17, **caractérisé en ce que** lesdites première et deuxième géométries sont régulières, ce qui permet audit arbre d'être inséré dans ladite ouverture à l'un d'une pluralité d'angles de détrompage prédéfinis.

19. Système de détrompage selon la revendication 18, **caractérisé en ce que** ledit angle prédéfini est sélectionné dans le groupe se composant de 0°, 45°, 90°, 135°, 180°, 225°, 270° et 315°.

20. Système de détrompage selon la revendication 18, **caractérisé en ce que** lesdites première et deuxième géométries sont sélectionnées dans un groupe se composant de triangulaire, carrée, hexagonale et octogonale.

21. Système de détrompage selon la revendication 18, **caractérisé en ce que** lesdites première et deuxième géométries sont composées d'une série de rainures et d'arêtes équidistantes.

22. Système de détrompage selon la revendication 21, **caractérisé en ce que** chacune desdites première et deuxième géométries comprend huit rainures et huit arêtes.

23. Système de détrompage selon la revendication 2, **caractérisé en ce que** la fiche de connecteur comprend en outre une coupure (84) et un module (82), ladite cavité unique dudit ensemble de cavités étant formée dans ledit module, et dans lequel ladite coupure est apte à recevoir ledit module.

24. Système de détrompage selon la revendication 23, **caractérisé en ce que** ledit module peut être inséré dans ladite coupure à l'un d'une pluralité d'angles prédéfinis.

25. Système de détrompage selon la revendication 23, **caractérisé en ce que** ladite coupure est carrée.

26. Système de détrompage selon la revendication 1, **caractérisé en ce que** la fiche de connecteur est une fiche de connecteur de type LC et la prise de réceptacle est apte à recevoir une fiche de connecteur de type LC.

27. Système de détrompage selon la revendication 1, **caractérisé en ce que** la fiche de connecteur est une fiche de connecteur de type SC et la prise de réceptacle est apte à recevoir une fiche de connecteur de type SC.

28. Système de détrompage selon la revendication 1, **caractérisé en ce que** la fiche de connecteur est une fiche de connecteur de type MU et la prise de réceptacle est apte à recevoir une fiche de connecteur de type MU.

29. Système de détrompage selon la revendication 1, **caractérisé en ce que** la fiche de connecteur est une fiche de connecteur de type FC et la prise de réceptacle est apte à recevoir une fiche de connecteur de type FC.

30. Système de détrompage selon la revendication 1, **caractérisé en ce que** chacun desdits bossages comprend en outre une ouverture (40) à l'intérieur de celui-ci, ladite ouverture étant apte à recevoir la virole lorsque l'un dudit ensemble de bossages est inséré dans l'une correspondante dudit ensemble de cavités.

31. Système de détrompage selon la revendication 30, **caractérisé en ce que** la virole est coaxiale à ladite cavité et l'ouverture est coaxiale audit bossage.

32. Système de détrompage selon la revendication 1, **caractérisé en ce que** les paires correspondantes de réceptacles et de fiches de connecteur sont identifiées en utilisant un code d'identification commun.

33. Système de détrompage selon la revendication 32, **caractérisé en ce que** ledit code d'identification commun est une couleur commune.

34. Réceptacle (26) pour fournir une interconnexion sélective avec l'une d'un ensemble de fiches de connecteur (2), chacune des fiches de connecteur dans l'ensemble comprenant une cavité (14) ayant une géométrie de détrompage de cavité unique formée à une extrémité avant de celle-ci et une virole de fibre optique (8) disposée à l'intérieur de la cavité, dans lequel le réceptacle comprend :
au moins une prise de réceptacle comprenant un bossage de réception de virole en relief (38) sur une paroi arrière (36) de celle-ci, ledit bossage ayant une forme correspondant à l'une d'une pluralité de géométries de détrompage de bossage uniques, chaque dite géométrie de détrompage de cavité unique correspondant à l'une desdites géométries de détrompage de bossage uniques ; et
dans lequel, lorsque ladite géométrie de détrompage de bossage correspond à la géométrie de détrompage de cavité unique, la fiche de connecteur peut être insérée dans ladite prise de réceptacle au fur et à mesure que ledit bossage est reçu dans la cavité et que la virole est insérée dans ledit bossage.

35. Réceptacle selon la revendication 34, **caractérisé en ce que** ledit bossage comprend une portion concentrique et une portion de détrompage (46).

36. Réceptacle selon la revendication 35, **caractérisé en ce que** ladite portion concentrique présente une coupe transversale circulaire.

37. Réceptacle selon la revendication 35, **caractérisé en ce que** ladite portion de détrompage comprend au moins une protubérance.

38. Réceptacle selon la revendication 37, **caractérisé en ce que** ladite protubérance comprend une surface extérieure biseautée (80).

39. Réceptacle selon la revendication 37, **caractérisé en ce que** ladite portion concentrique de bossage comprend en outre une portion d'alignement supérieure (76).

40. Réceptacle selon la revendication 39, **caractérisé en ce que** ladite au moins une protubérance présente une hauteur qui est inférieure à une hauteur de ladite portion d'alignement supérieure.

41. Réceptacle selon la revendication 40, **caractérisé en ce que** ladite au moins une protubérance présente une hauteur qui est sensiblement la moitié de ladite hauteur de portion d'alignement supérieure.

42. Réceptacle selon la revendication 37, **caractérisé en ce que** ladite au moins une protubérance est une arête.

43. Réceptacle selon la revendication 35, **caractérisé en ce que** ladite portion de détrompage de bossage comprend au moins une indentation.

44. Réceptacle selon la revendication 43, **caractérisé en ce que** ladite au moins une indentation présente une profondeur qui est inférieure à une hauteur de ladite portion concentrique.

45. Réceptacle selon la revendication 44, **caractérisé en ce que** ladite profondeur d'indentation est sensiblement la moitié de ladite hauteur de portion concentrique.

46. Réceptacle selon la revendication 43, **caractérisé en ce que** ladite au moins une indentation est une encoche.

47. Réceptacle selon la revendication 35, **caractérisé en ce que** ladite portion de détrompage de bossage comprend au moins une protubérance et au moins une indentation.

48. Réceptacle selon la revendication 37, **caractérisé en ce que** ledit bossage comprend en outre une portion d'alignement supérieure (80).

49. Réceptacle selon la revendication 35, **caractérisé en ce que** ladite portion de détrompage est agencée à un angle prédéfini autour d'un centre de ladite portion concentrique.

50. Réceptacle selon la revendication 49, **caractérisé en ce que** ledit angle prédéfini est sélectionné dans le groupe se composant de 0°, 45°, 90°, 135°, 180°, 225°, 270° et 315°.

51. Réceptacle selon la revendication 34, **caractérisé en ce que** ladite au moins une prise de réceptacle comprend en outre une ouverture (90) dans une paroi arrière (36) de celle-ci et chacun dudit ensemble de bossages comprend en outre un arbre (86), ladite ouverture étant apte à recevoir ledit arbre.

52. Réceptacle selon la revendication 51, **caractérisé en ce que** ledit arbre est fixé dans ladite ouverture en utilisant un adhésif.

53. Réceptacle selon la revendication 51, **caractérisé en ce que** ladite ouverture comprend une première géométrie et ledit arbre comprend une deuxième géométrie apte à correspondre à ladite première géométrie de sorte que, lorsque ledit arbre est reçu dans ladite ouverture, ledit arbre est empêché de tourner dans ladite ouverture.

54. Réceptacle selon la revendication 53, **caractérisé en ce que** lesdites première et deuxième géométries sont régulières, ce qui permet audit arbre d'être inséré dans ladite ouverture à l'un d'une pluralité d'angles de détrompage prédéfinis.

55. Réceptacle selon la revendication 54, **caractérisé en ce que** ledit angle prédéfini est sélectionné dans le groupe se composant de 0°, 45°, 90°, 135°, 180°, 225°, 270° et 315°.

56. Réceptacle selon la revendication 53, **caractérisé en ce que** lesdites première et deuxième géométries sont sélectionnées dans un groupe se composant de triangulaire, carrée, hexagonale et octogonale.

57. Réceptacle selon la revendication 53, **caractérisé en ce que** lesdites première et deuxième géométries sont composées d'une série équidistante de rainures et d'arêtes.

58. Réceptacle selon la revendication 57, **caractérisé en ce que** chacune desdites première et deuxième géométries comprend huit rainures et huit arêtes.

59. Réceptacle selon la revendication 34, **caractérisé en ce que** ladite virole est coaxiale à ladite cavité et ladite ouverture est coaxiale audit bossage.

60. Réceptacle selon la revendication 34, **caractérisé en ce que** ladite au moins une prise de réceptacle est apte à recevoir une fiche de connecteur de type LC.

61. Réceptacle selon la revendication 34, **caractérisé en ce que** ladite au moins une prise de réceptacle est apte à recevoir une fiche de connecteur de type SC.

62. Réceptacle selon la revendication 34, **caractérisé en ce que** ladite au moins une prise de réceptacle est apte à recevoir une fiche de connecteur de type MU.

63. Réceptacle selon la revendication 34, **caractérisé en ce que** ladite au moins une prise de réceptacle est apte à recevoir une fiche de connecteur de type FC.

64. Réceptacle selon la revendication 34, **caractérisé en ce que** ladite au moins une prise de réceptacle termine une deuxième fibre optique, et dans lequel, lorsque la fiche de connecteur est insérée dans ladite prise de réceptacle, la première fibre optique est mise en alignement axial avec ladite deuxième fibre optique.

65. Réceptacle selon la revendication 64, **caractérisé en ce que**, lorsque la fiche de connecteur est insérée dans ladite prise de réceptacle, une extrémité opposée de la première fibre optique est mise en contact avec une extrémité opposée de ladite deuxième fibre optique.

66. Réceptacle selon la revendication 34, **caractérisé en ce que** ladite géométrie de bossage est telle qu'une fiche de connecteur non détrompée peut être insérée dans ladite prise de réceptacle.

67. Connecteur terminant une fibre optique (4) pour fournir une interconnexion sélective avec l'une d'un ensemble de prises de réceptacle (26), chacune des prises de réceptacle dans l'ensemble comprenant une virole en relief (12) recevant un bossage (38) sur une paroi arrière (36) de celle-ci ayant une géométrie de détrompage de bossage unique, dans lequel le connecteur comprend :
une fiche de connecteur (2) apte à être insérée dans l'ensemble de prises de réceptacle et comprenant une cavité (14), ladite cavité avec la virole (12) étant disposée à l'intérieur de celle-ci ayant l'une d'une pluralité de géométries de détrompage de cavité uniques formée à une extrémité avant de celle-ci, chaque géométrie de détrompage de bossage unique correspondant à l'une respective desdites géométries de détrompage de cavité uniques ; et
dans lequel, lorsque ladite géométrie de détrompage de bossage unique correspond à ladite géométrie de détrompage de cavité, la fiche de connecteur peut être insérée dans ladite prise de réceptacle au fur et à mesure que le bossage est reçu dans la cavité et que la virole est insérée dans le bossage.

68. Connecteur selon la revendication 67, **caractérisé en ce que** ladite cavité comprend une portion concentrique et une portion de détrompage (24).

69. Connecteur selon la revendication 68, **caractérisé en ce que** ladite portion concentrique présente une coupe transversale circulaire.

70. Connecteur selon la revendication 68, **caractérisé en ce que** ladite portion de détrompage comprend au moins une indentation.

71. Connecteur selon la revendication 70, **caractérisé en ce que** ladite portion concentrique comprend en outre une portion d'alignement (66).

72. Connecteur selon la revendication 71, **caractérisé en ce qu'**une profondeur de ladite au moins une indentation est inférieure à une profondeur de ladite portion d'alignement.

73. Connecteur selon la revendication 72, **caractérisé en ce que** ladite profondeur d'indentation est sensiblement la moitié de ladite profondeur de portion d'alignement.

74. Connecteur selon la revendication 68, **caractérisé en ce que** ladite portion de détrompage comprend au moins une protubérance.

75. Connecteur selon la revendication 74, **caractérisé en ce que** ladite au moins une protubérance est biseautée.

76. Connecteur selon la revendication 74, **caractérisé en ce que** ladite portion concentrique comprend en outre une portion d'alignement.

77. Connecteur selon la revendication 76, **caractérisé en ce qu'**une hauteur de ladite au moins une protubérance est inférieure à une profondeur de ladite portion d'alignement.

78. Connecteur selon la revendication 77, **caractérisé en ce que** ladite hauteur de protubérance est sensiblement la moitié de ladite profondeur de portion d'alignement.

79. Connecteur selon la revendication 70, **caractérisé en ce que** ladite au moins une indentation est une encoche.

80. Connecteur selon la revendication 74, **caractérisé en ce que** ladite au moins une protubérance est une arête.

81. Connecteur selon la revendication 68, **caractérisé en ce que** ladite portion de détrompage comprend au moins une protubérance et au moins une indentation.

82. Connecteur selon la revendication 68, **caractérisé en ce que** ladite portion de détrompage est agencée à un angle prédéfini autour d'un centre de ladite portion concentrique.

83. Connecteur selon la revendication 82, **caractérisé en ce que** ledit angle prédéfini est sélectionné dans le groupe se composant de 0°, 45°, 90°, 135°, 180°, 225°, 270° et 315°.

84. Connecteur selon la revendication 67, **caractérisé en ce que** ladite fiche de connecteur comprend en outre une coupure (84) et un module (82), ladite géométrie de détrompage de cavité unique étant formée dans ledit module, et dans lequel ladite coupure est apte à recevoir ledit module.

85. Connecteur selon la revendication 84, **caractérisé en ce que** ledit module peut être inséré dans ladite coupure à l'un d'une pluralité d'angles prédéfinis.

86. Connecteur selon la revendication 84, **caractérisé en ce que** ledit module est fixé dans ladite coupure en utilisant un adhésif.

87. Connecteur selon la revendication 84, **caractérisé en ce que** ladite coupure est carrée.

88. Connecteur selon la revendication 67, **caractérisé en ce que** ladite fiche de connecteur est une fiche de connecteur de type LC.

89. Connecteur selon la revendication 67, **caractérisé en ce que** ladite fiche de connecteur est une fiche de connecteur de type SC.

90. Connecteur selon la revendication 67, **caractérisé en ce que** ladite fiche de connecteur est une fiche de connecteur de type MU.

91. Connecteur selon la revendication 67, **caractérisé en ce que** ladite fiche de connecteur est une fiche de connecteur de type FC.
